# EUROPEAN PATENT APPLICATION

(11) **EP 3 372 889 A1**
(43) Date of publication of application: **12.09.2018**
(21) Application number: 16862138.1
(22) Date of filing: 02.11.2016
(51) Int. Cl.: F21S 11/00, E06B 5/00, E06B 9/386, F21V 3/00, F21V 5/02, F21V 5/04, F21V 11/04, F21V 14/08, G02B 5/00, G02B 5/04

(54) **DAYLIGHTING DEVICE**

(30) Priority: 02.11.2015 JP 2015216071
(71) Applicant: Sharp Kabushiki Kaisha, Sakai City, Osaka 590-8522 (JP)
(72) Inventor: NISHINAKA Shumpei, Osaka 590-8522 (JP); UEKI Shun, Osaka 590-8522 (JP); KANNO Toru, Osaka 590-8522 (JP); SHINOZAKI Daisuke, Osaka 590-8522 (JP); YUI Hideomi, Osaka 590-8522 (JP); KAMADA Tsuyoshi, Osaka 590-8522 (JP)
(74) Representative: Müller Hoffmann & Partner
(86) International application number: PCT/JP2016/082620
(87) International publication number: WO 2017/078078

(57) **Abstract**

A daylighting device according to an aspect of the present invention includes a daylighting member and a support unit, disposed on an interior side of a window glass to support the daylighting member. The support unit includes an adjusting mechanism that adjusts a position of the daylighting member relative to the window glass.

## Description

### Technical Field

An aspect of the present invention relates to a daylighting device.

The present application claims the right of priority under Japanese Patent Application No. 2015-216071 filed to Japanese Patent Office on November 2, 2015, and the content thereof is incorporated herein by reference.

### Background Art

To efficiently guide outdoor daylight such as sunlight incident on a window glass into a room, installing a daylighting device including a daylighting film throughout a surface of the window glass is known (see, for example, PTL 1).

### Citation List

### Patent Literature

PTL 1: Japanese Unexamined Patent Application Publication No. 2013-156554

### Summary of Invention

### Technical Problem

To install the daylighting device over a surface of the window glass, the area of the surface of the window glass below the daylighting device needs to be shielded from light in order to block direct light serving as glare and guide only the light directed to the ceiling through the daylighting device into a room. To dispose an existing blind or roll screen for light-shielding purposes, however, a head box is also separately needed to wind up and house the blind or roll screen. The blind or roll screen is fixed to a position immediately below the blind box.

Buildings often have eaves on the outer side of the window. The eaves intercept the sunlight that is to be incident on the daylighting device. The blind or roll screen is disposed on the inner side of the window. If the blind or roll screen is spaced apart from the window surface due to the structure of the building, the daylighting device fails to have a sufficiently large daylighting area with the effect of the eaves.

The daylighting area varies depending on the season or time, and cannot be controlled as intended.

An aspect of the present invention is made in view of problems of the existing technologies and aims to provide a daylighting device capable of appropriately controlling the daylighting area.

### Solution to Problem

A daylighting device according to an aspect of the present invention includes a daylighting member, and a support unit, disposed on an interior side of a window glass to support the daylighting member. The support unit includes an adjusting mechanism that adjusts a position of the daylighting member relative to the window glass.

In a daylighting device according to an aspect of the present invention, the adjusting mechanism may include an extended portion that extends downward from a fastening position at which the adjusting mechanism is fastened to a room, and a support portion that supports the daylighting member and moves relative to the extended portion.

In a daylighting device according to an aspect of the present invention, the adjusting mechanism may move the daylighting member toward and away from the window glass.

In a daylighting device according to an aspect of the present invention, the adjusting mechanism may move the daylighting member toward the window glass beyond a fastening position at which the adjusting mechanism is fastened to a room or away from the window glass beyond the fastening position.

In a daylighting device according to an aspect of the present invention, the adjusting mechanism may vertically move the daylighting member.

In a daylighting device according to an aspect of the present invention, the adjusting mechanism may include restricting means for restricting an amount of a downward movement of the daylighting member.

In a daylighting device according to an aspect of the present invention, the restricting means may be a stopper member.

A daylighting device according to an aspect of the present invention may also include a daylighting auxiliary sheet or a sheet or a structure intended to additionally have design qualities, which is attachable to and removable from the support unit and disposed on a side of the daylighting member moved toward the window glass by the adjusting mechanism, the side of the daylighting member being across from the window glass.

A daylighting device according to an aspect of the present invention may also include a light-shielding member disposed on the support unit on a side of the daylighting member moved toward the window glass by the adjusting mechanism, the side of the daylighting member being across from the window glass. The light-shielding member may have a structure capable of adjusting light control and light shielding, such as a structure rotatable to an interior side of the support unit or a structure capable of being wound up such as a roll screen.

In a daylighting device according to an aspect of the present invention, the adjusting mechanism may incline a surface of the daylighting member with respect to a surface of the window glass.

A daylighting device according to an aspect of the present invention may also include a weight disposed on the support unit below the daylighting member. The weight may move relative to the support unit to change a distance between the weight and the window glass.

In a daylighting device according to an aspect of the present invention, the weight may have a structure constituted of a blind including a plurality of light-shielding slats. Alternatively, the weight may have a structure constituted of a light shielding member such as a roll screen or a curtain.

A daylighting device according to an aspect of the present invention may also include a device, such as a spirit level, disposed on the support unit and capable of checking whether the device is parallel to a window.

### Advantageous Effects of Invention

An aspect of the present invention can provide a daylighting device capable of appropriately controlling the daylighting area.

### Brief Description of Drawings

[Fig. 1] Fig. 1 is a view of a schematic structure of a daylighting system according to a first embodiment.
[Fig. 2] Fig. 2 is a perspective view of a schematic structure of the daylighting system according to the first embodiment.
[Fig. 3A] Fig. 3A is a diagram of an optical path and a first daylighting member having a fine structure directed to a side from which light is incident.
[Fig. 3B] Fig. 3B is a diagram of an optical path and a second daylighting member having a fine structure directed to a side from which light emerges.
[Fig. 3C] Fig. 3C is a diagram of a third daylighting member having a fine structure directed to a side from which light is incident.
[Fig. 3D] Fig. 3D is a diagram of a fourth daylighting member having a fine structure directed to a side from which light is incident.
[Fig. 3E] Fig. 3E is a diagram of a fifth daylighting member having a fine structure directed to a side from which light is incident.
[Fig. 3F] Fig. 3F is a diagram of an optical path and a sixth daylighting member having a fine structure directed to a side from which light emerges.
[Fig. 3G] Fig. 3G is a diagram of an optical path and a seventh daylighting member having a fine structure directed to a side from which light emerges.
[Fig. 3H] Fig. 3H is a diagram of an optical path and an eighth daylighting member having a fine structure directed to a side from which light emerges.
[Fig. 4] Fig. 4 is a diagram of a schematic structure of a daylighting device according to a second embodiment (daylighting device in a first position).
[Fig. 5] Fig. 5 is a diagram of a schematic structure of the daylighting device according to the second embodiment (daylighting device in a second position).
[Fig. 6] Fig. 6 is a diagram of a schematic structure of a daylighting device according to a third embodiment (daylighting device in an upper position).
[Fig. 7] Fig. 7 is a diagram of a schematic structure of a daylighting device according to a third embodiment (daylighting device in a lower position).
[Fig. 8] Fig. 8 is a diagram of a modification example of an adjusting mechanism according to the third embodiment.
[Fig. 9] Fig. 9 is a diagram of a schematic structure of a daylighting device according to a fourth embodiment.
[Fig. 10] Fig. 10 is a perspective view of the schematic structure of the daylighting device according to the fourth embodiment.
[Fig. 11] Fig. 11 is a diagram of a schematic structure of a daylighting device according to a fifth embodiment.
[Fig. 12] Fig. 12 is a diagram of a light-shielding sheet (light-shielding member) according to a fifth embodiment in a state after being rotated.
[Fig. 13A] Fig. 13A is a diagram of a schematic structure of a daylighting device according to a sixth embodiment in a normal state.
[Fig. 13B] Fig. 13B is a diagram of a schematic structure of the daylighting device according to the sixth embodiment in a state of being inclined with respect to the vertical direction.
[Fig. 13C] Fig. 13C is a diagram of a schematic structure of the daylighting device according to the sixth embodiment in a state of being inclined with respect to the lateral direction.
[Fig. 14A] Fig. 14A is a first view specifically illustrating the structure of Fig. 13B.
[Fig. 14B] Fig. 14B is a second view specifically illustrating the structure of Fig. 13B.
[Fig. 15A] Fig. 15A is a first view specifically illustrating the structure of Fig. 13B.
[Fig. 15B] Fig. 15B is a second view specifically illustrating the structure of Fig. 13B.
[Fig. 16A] Fig. 16A is a first view specifically illustrating the structure of Fig. 13C.
[Fig. 16B] Fig. 16B is a second view specifically illustrating the structure of Fig. 13C.
[Fig. 17A] Fig. 17A is a first view specifically illustrating the structure of Fig. 13C.
[Fig. 17B] Fig. 17B is a second view specifically illustrating the structure of Fig. 13C.
[Fig. 18] Fig. 18 is a diagram of a schematic structure of a daylighting device according to a seventh embodiment.
[Fig. 19] Fig. 19 is a diagram of the schematic structure of a daylighting device according to the seventh embodiment.
[Fig. 20] Fig. 20 is a diagram of a weight according to a modification example.
[Fig. 21] Fig. 21 is a sectional view of a room model equipped with a daylighting device and an illumination control system, taken along line J-J' of Fig. 22.
[Fig. 22] Fig. 22 is a plan view of a ceiling of the room model.

### Description of Embodiments

Daylighting devices according to embodiments of the present invention are described.

The embodiments are specifically illustrated for better understanding of the gist of the invention, and not intended to limit the present invention unless otherwise particularly noted.

### [First Embodiment]

A daylighting system according to a first embodiment of the present invention is described below.

Between the drawings described below, components may be illustrated with different dimensions for ease of illustration.

### (Daylighting System)

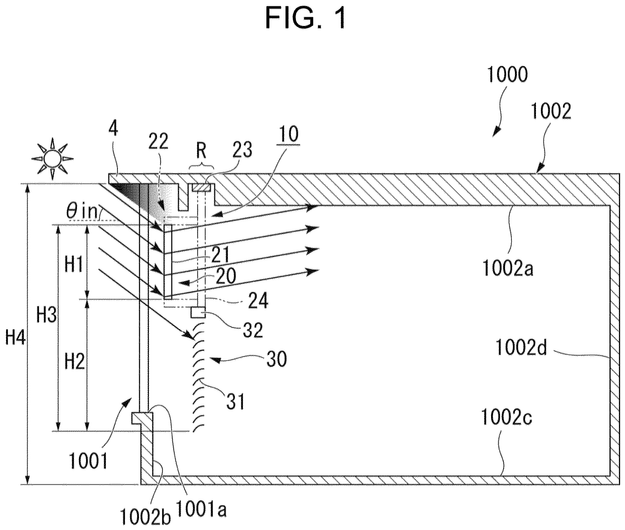

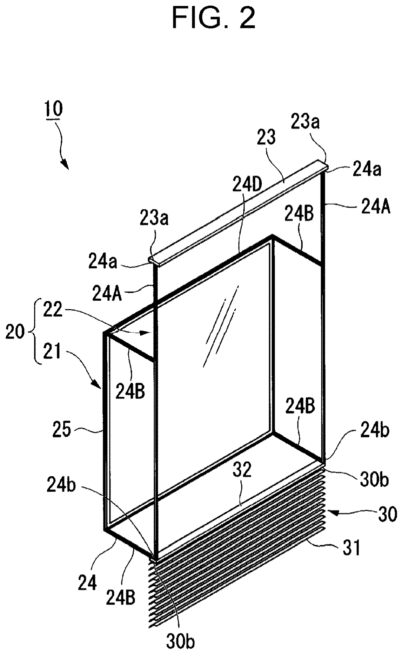

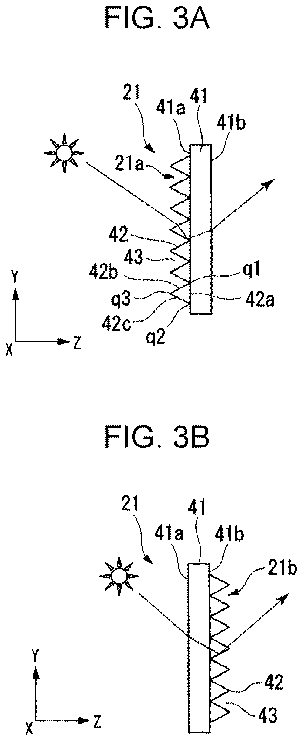

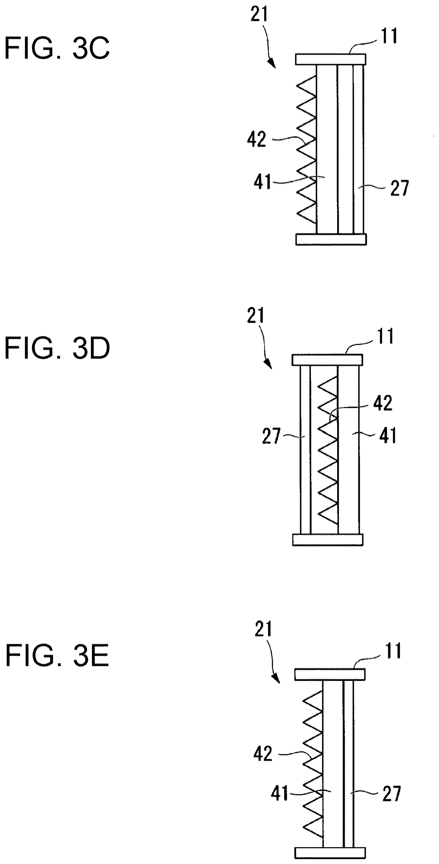

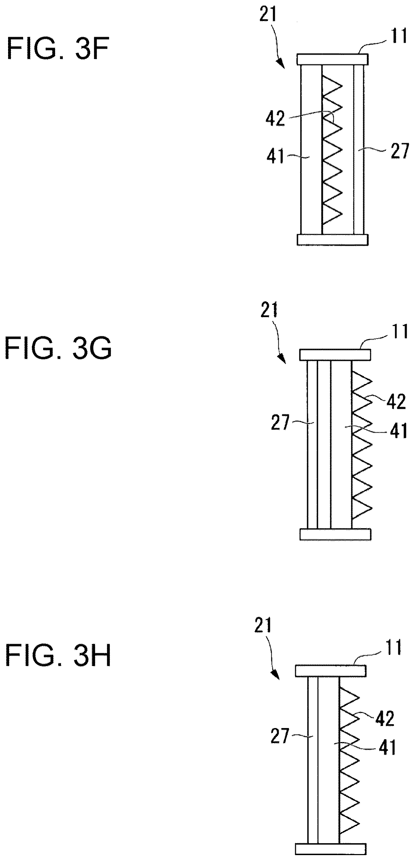

Fig. 1 is a diagram of a schematic structure of a daylighting system according to a first embodiment. Fig. 2 is a perspective view of a schematic structure of the daylighting system according to the first embodiment. Fig. 3A is a diagram of an optical path and a daylighting member having a fine structure directed to a side from which light is incident. Fig. 3B is a diagram of an optical path and a daylighting member having a fine structure directed to a side from which light emerges. Figs. 3C, 3D, and 3E are diagrams of structures including a light diffusion sheet in addition to the structure of Fig. 3A. Figs. 3F, 3G, and 3H are diagrams of structures including a light diffusion sheet in addition to the structure of Fig. 3B.

Fig. 1 illustrates a room model 1000, a window glass 1001, a room 1002, a ceiling 1002a, a wall 1002b on which sunlight is incident, a floor 1002c, and a wall 1002d opposing the wall 1002b.

As illustrated in Fig. 1, the room 1002 is an office, for example, and has a rectangular cross section (X-Z cross section). The room 1002 has a height H4 (height from the floor 1002c to the ceiling 1002a) of, for example, 2.7 m. The window glass 1001 is disposed in the wall 1002b to extend for, for example, 1.8 m from the ceiling 1002a. The window glass 1001 has a height H3 of, for example, 1.8 m.

A daylighting system 10 according to the embodiment includes a daylighting device 20 and a light-shielding device 30. The daylighting device 20 is disposed along a surface 1001a of the window glass 1001 facing the interior (inner side of the room 1002), to face an upper portion (near the ceiling 1002a) of the interior side surface 1001a of the window glass 1001. The light-shielding device 30 is connected to the daylighting device 20 and disposed to face a lower portion (near the floor 1002c) of the interior side surface 1001a of the window glass 1001.

The daylighting device 20 included in the daylighting system 10 is disposed at a portion of the interior side surface 1001a of the window glass 1001 that does not interrupt the human's view (for example, an area extending up to 0.65 m from the ceiling 1002a). The daylighting device 20 has a height H1 of, for example, 0.65 m.

The light-shielding device 30 included in the daylighting system 10 is disposed at a portion of the interior side surface 1001a of the window glass 1001 that interrupts the human's view (for example, an area extending from a point 0.65 m away from the ceiling 1002a to a point 1.8 m away from the ceiling 1002a). The light-shielding device 30 has a height H2 of, for example, 1.15 m.

Specifically, the height H5 of the daylighting system 10 is the sum of the height H1 of the daylighting device 20 and the height H2 of the light-shielding device 30, and is, for example, 1.8 m.

The daylighting device 20 is constituted of a component having daylighting characteristics, for example, a daylighting panel, a roll screen, a curtain, or a vertical blind. Fig. 1 illustrates a daylighting panel as an example.

Examples of an optically transparent material include optically transparent films (substrates) such as a triacetylcellulose (TAC) film, a polyethylene terephthalate (PET) film, a cyclo olefin polymer (COP) film, a polycarbonate (PC) film, a polyethylene naphthalate (PEN) film, a polyether sulphone (PES) film, and a polyimide (PI) film.

The light-shielding device 30 is constituted of a component made of an opaque or semitransparent material that prevents discomfort glare, such as a roll screen, a curtain, or a vertical blind. Fig. 1 illustrates a vertical blind, as an example.

An example of an opaque material is a film (substrate) formed into a predetermined shape and made of an aluminium foil or an optically transparent resin added with a pigment, examples of the optically transparent resin including triacetylcellulose (TAC), polyethylene terephthalate (PET), cyclo olefin polymer (COP), polycarbonate (PC), polyethylene naphthalate (PEN), polyether sulphone (PES), and polyimide (PI).

### (Daylighting Device)

As illustrated in Figs. 1 and 2, a daylighting device 20 according to an embodiment includes a daylighting member 21 and a support unit 22.

The daylighting member 21 includes the above-described daylighting panel and is fixed to the ceiling 1002a of the room 1002 with the support unit 22.

As illustrated in Fig. 3A, the daylighting member 21 includes a substrate 41, optically transparent multiple daylighting portions 42, disposed on a first surface 41a of the substrate 41, and gap portions 43, disposed between the multiple daylighting portions 42. In the present embodiment, the daylighting member 21 is disposed while having a surface (light incident surface 21a) having a fine structure constituted of the multiple daylighting portions 42 directed to a side from which sunlight is incident.

The substrate 41 is made of an optically transparent resin such as a thermoplastic polymer, a thermosetting resin, or a photo-polymerized resin. Examples usable as an optically transparent resin include an acrylic polymer, an olefinic polymer, a vinyl polymer, a cellulosic polymer, an amidic polymer, a fluoropolymer, a polyurethane polymer, a silicone polymer, and an imidic polymer. Among these, preferably usable examples include a polymethyl methacrylate resin (PMMA), triacetylcellulose (TAC), polyethylene terephthalate (PET), a cyclo olefin polymer (COP), polycarbonate (PC), polyethylene naphthalate (PEN), polyether sulphone (PES), and polyimide (PI). The total luminous transmittance of the substrate 41 according to JIS K7361-1 is preferably higher than or equal to 90%. The substrate 41 can thus have a sufficiently high transparency.

The daylighting portions 42 are, for example, made of an optically-transparent, photosensitive organic material such as an acrylic resin, an epoxy resin, or a silicone resin. A material obtained by mixing a polymerization initiator, a coupler, a monomer, or an organic solvent into the above organic material is usable. The polymerization initiator may contain various types of additives such as a stabilizer, an inhibitor, a plasticizer, a fluorescent brightening agent, a mold release agent, a chain transfer agent, or other photo-polymerized monomers. The material described in Japanese Patent No. 4129991 is also usable. The total luminous transmittance of the daylighting portions 42 according to JIS K7361-1 is preferably higher than or equal to 90%. The daylighting portions 42 can thus have sufficiently high transparency.

The multiple daylighting portions 42 extend in the longitudinal direction (X direction) of the substrate 41 and are arranged side by side in the lateral direction (Y direction) of the substrate 41. Each daylighting portion 42 has a prism shape having a triangular cross section. Specifically, each daylighting portion 42 has a first surface portion 42a, opposing the first surface 41a of the substrate 41, a second surface portion 42b adjacent to the first surface portion 42a with a first corner portion q1 interposed therebetween, and a third surface portion (reflection surface or side surface) 42c adjacent to the first surface portion 42a with a second corner portion q2, opposite to the first corner portion q1, interposed therebetween and adjacent to the second surface portion 42b with a third corner portion q3 interposed therebetween.

Air (gap portions 43) is interposed between the multiple daylighting portions 42. Thus, the second surface portion 42b and the third surface portion 42c serve as interfaces between the components of each daylighting portion 42 and air. The gap portions may be filled with another low refractive-index material. However, a refractive index difference at the interface between the inside and the outside of the daylighting portions 42 is maximum when air is disposed on the outside rather than when any low refractive index material is disposed on the outside. According to the Snell's law, the presence of air minimizes the critical angle of light incident on the daylighting portions 42 and totally reflected by the second surface portions 42b or the third surface portions 42c. Thus, the incidence angle of the light totally reflected by the second surface portion 42b or the third surface portion 42c has the widest range. The light incident on the daylighting portions 42 can thus be efficiently guided to another surface of the substrate 41. Consequently, the loss of the light incident on the daylighting portions 42 is reduced and light emerging from another surface of the substrate 41 can have higher luminance.

Desirably, the refractive index of the substrate 41 and the refractive index of the daylighting portions 42 are substantially equal to each other. For example, when the refractive index of the substrate 41 and the refractive index of the daylighting portions 42 significantly differ from each other, light incident on the substrate 41 from the daylighting portions 42 may be unnecessarily refracted or reflected at the interface between the daylighting portions 42 and the substrate 41. In this case, problems may occur such as a failure to acquire intended daylighting characteristics or a reduction of the luminance.

A daylighting plate 40 can be manufactured by, for example, forming multiple daylighting portions 42 on the substrate 41 by photolithography. Instead of the method involving photolithography, the daylighting plate 40 can be manufactured by a method such as melt extrusion, extrusion molding, or imprinting. In the method such as melt extrusion or extrusion molding, the substrate 41 and the daylighting portions 42 are integrally formed from the same resin.

Alternatively, the daylighting portions 42 may be formed over the entire surface of a film and the film may be bonded to the first surface 41a of the substrate 41. The method for forming the daylighting portions 42 over the surface of a film may involve, for example, the above described photolithography or imprinting.

Preferably, the daylighting member 21 has its periphery held by a loop-shaped frame member 25 (Fig. 2).

In the present embodiment, the daylighting member 21 is disposed while having the first surface 41a of the substrate 41 on which the multiple daylighting portions 42 are disposed directed to the incident side (window side). This is not the only possible structure, however. For example, as illustrated in Fig. 3B, the daylighting member 21 may have the multiple daylighting portions 42 disposed on a second surface 41b of the substrate 41 and the surface (light emerging surface 21b) having a fine structure constituted of these multiple daylighting portions 42 directed to a room side.

Alternatively, the structure may also include a light diffusion sheet 27. For example, as illustrated in Figs. 3C to 3H, the daylighting member 21 and the light diffusion sheet 27 may be held by a frame 11.
Figs. 3C, 3D, and 3E illustrate structures including a light diffusion sheet 27 in addition to the structure illustrated in Fig. 3A.

In Fig. 3C, the light diffusion sheet 27 is disposed a distance apart from itself to the light emerging side of the daylighting member 21 having the daylighting portions 42 directed toward the window glass. In Fig. 3D, the light diffusion sheet 27 is disposed a distance apart from itself to the light incident side of the daylighting member 21. In Fig. 3E, the light diffusion sheet 27 adjoins the light emerging side of the daylighting member 21.

Figs. 3F, 3G, and 3H illustrate structures including a light diffusion sheet 27 in addition to the structure illustrated in Fig. 3B.

In Fig. 3F, the light diffusion sheet 27 is disposed a distance apart from itself to the light emerging side of the daylighting member 21 having the daylighting portions 42 directed to a room side. In Fig. 3G, the light diffusion sheet 27 is disposed a distance apart from itself to the light incident side of the daylighting member 21. In Fig. 3H, the light diffusion sheet 27 adjoins the light emerging side of the daylighting member 21.

In the above-described structures, light emerging through the daylighting portions 42 can be diffused by the light diffusion sheet 27 to reduce glare.

Desirably, the light diffusion sheet 27 has anisotropic light diffusion characteristics with which it mainly expands light horizontally (longitudinal direction of the daylighting portions 42) and expands the light vertically (lateral direction of the daylighting portions 42) to a lesser extent. The light diffusion sheet 27 having anisotropic light diffusion characteristics can uniformize the brightness of the room in the lateral direction.

Examples of a structure having light diffusion characteristics include a lenticular lens structure, a light diffusion particle structure, and a pseudo stripe structure.

As illustrated in Figs. 1 and 2, the support unit 22 includes a fastening device 23, which fastens the daylighting member 21 to the ceiling 1002a, and an adjusting mechanism 24, which adjusts the position of the daylighting member 21 relative to the window glass 1001.

The fastening device 23 extends in the lateral direction of the window and is screwed at a fastening position R of the ceiling 1002a.

The adjusting mechanism 24 supports the daylighting member 21 at a portion closer to the window than the fastening device 23, and connects the daylighting member 21 and the fastening device 23 to each other.

The adjusting mechanism 24 includes a pair of extended portions 24A, which extend downward from the fastening position R at which it is fastened to the ceiling, four support portions 24B, each having one end coupled to a corresponding one of the extended portions 24A, and a frame 24D, to which the other ends of the four support portions 24B are coupled. The pair of extended portions 24A have their first ends 24a coupled to both end portions 23a of the fastening device 23 in an extension direction, and have their second ends 24b coupled to ends 30b of the light-shielding device 30. The four support portions 24B are disposed at four corners of the frame 24D to couple the frame 24D and the extended portions 24A to each other. The frame 24D is a rectangular frame that supports the daylighting member 21 housed in the frame member 25.

The structure of the adjusting mechanism 24 is not limited to the above-described one and may be any of various other structures. For example, the frame 24D may also serve as the frame member 25 that holds the periphery of the daylighting member 21.

The light-shielding device 30 is disposed at a position immediately below the fastening device 23 to hang down from the adjusting mechanism 24. Specifically, a head box 32, which houses the blind 31, is fixed to the second ends 24b of the pair of extended portions 24A of the adjusting mechanism 24.

The daylighting system 10 according to the embodiment has the above-described structure.

In the existing structure, the daylighting member 21 is usually positioned at a first position, immediately below the fastening device 23. Thus, as illustrated in Fig. 1, part of sunlight L incident on the daylighting member 21 at a predetermined solar altitude (incidence angle θ_{IN}) is shaded by eaves 4 of the building or a window sash. Specifically, the daylighting member 21 may have an area on which sunlight is not incident in an upper portion depending on the incidence angle θᵢₙ of the sunlight L.

The daylighting system 10 according to the present embodiment, on the other hand, can hold the daylighting member 21 in a second position, closer to the window glass 1001 than the first position that is immediately below the solid position, using the support unit 22 of the daylighting device 20. The daylighting member 21 located closer to the window glass 1001 is less likely to be shaded by the eaves 4 of the building and thus allows a larger amount of sunlight to be incident on the daylighting member 21. The daylighting member 21 thus has a larger incident area and captures a larger amount of light into a room. Thus, a bright environment can be acquired. In the present embodiment, the daylighting area of the daylighting member can thus be appropriately controlled.

### [Second Embodiment]

A daylighting device according to a second embodiment of the present invention is described now.

The basic structure of the daylighting device according to the present embodiment described below is substantially the same as that of the first embodiment, but differs in that the daylighting device is operable (movable forward and rearward). The following describes the point different from that of the first embodiment in detail and does not describe the same points. In the drawings used for the description, components that are the same as those illustrated in Figs. 1 to 3H are denoted with the same reference signs.

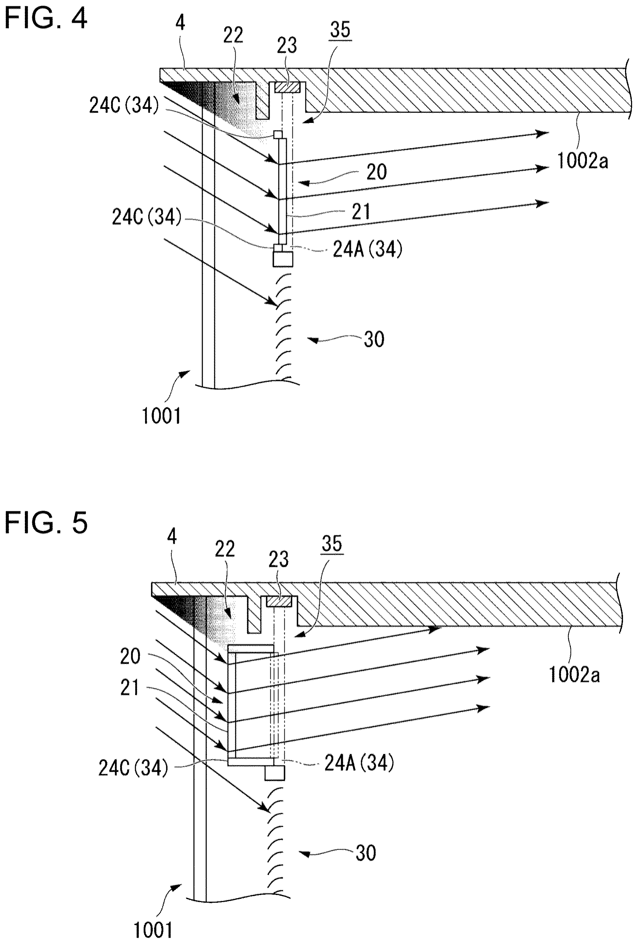

Fig. 4 is a schematic structure of the daylighting device according to the second embodiment in a first position. Fig. 5 is a schematic structure of the daylighting device according to the second embodiment in a second position.

A daylighting system 35 according to the present embodiment includes an adjusting mechanism 34, which moves the daylighting member toward and away from the window glass 1001. The adjusting mechanism 34 includes a pair of extended portions 24A (one of which is not illustrated) and multiple support portions 24C, which support the daylighting member 21 and move horizontally relative to the extended portions 24A.

In the present embodiment, four support portions 24C are disposed near the four corners of the daylighting member 21. The multiple support portions 24C can expand and contract to move the daylighting member 21 forward and backward (horizontally). This structure can thus move the daylighting member 21 toward and away from the window glass 1001.

An example of the support portions 24C includes a sliding mechanism including a rail and a slider. The support portions 24C may have any of various other structures instead of the slider cited above as an example. Another example is an expansion-contraction mechanism including a pair of openable and closable rod-like bodies having their axes intersecting in an X shape. The number of the support portions 24B is not limited to the above-described number and is appropriately determined depending on the structure.

The adjusting mechanism 24 having the above-described structure allows the daylighting member 21 to move forward and rearward (horizontally), and thus can move the daylighting member 21 toward and away from the window glass 1001 between the first position, immediately below the above-described fastening position, and the second position, closer to the window glass 1001 than the first position.

The position at which the daylighting system 35 is installed and the effect of the eaves differ depending on the structure of a building. Thus, when the daylighting member 21 is moved to an optimum position in accordance with the structure of the building, the area on which direct sunlight is incident can be adjusted to increase. Thus, the daylighting amount captured into a room can be adjusted depending on the season or the room conditions.

### [Third Embodiment]

A daylighting device according to a third embodiment of the present invention is described now.

The basic structure of the daylighting device according to the present embodiment described below is substantially the same as that of the first embodiment, but differs in that the daylighting device is operable (vertically movable). The following describes the point different from that of the first embodiment in detail and does not describe the same points. In the drawings used for the description, components that are the same as those illustrated in Figs. 1 to 3H are denoted with the same reference signs.

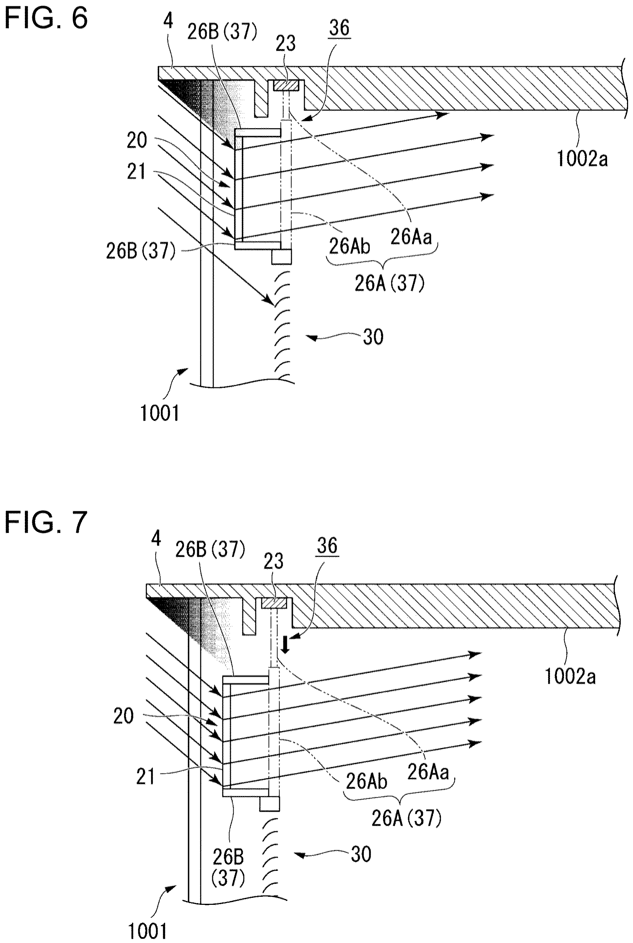

Fig. 6 is a schematic structure of a daylighting device according to a third embodiment in an upper position. Fig. 7 is a schematic structure of the daylighting device according to the third embodiment in a lower position.

As illustrated in Fig. 6, a daylighting system 36 according to the present embodiment includes an adjusting mechanism 37, which moves the daylighting member 21 up and down (vertically).

The adjusting mechanism 37 includes a pair of extended portions 26A (one of which is not illustrated), extending downward from the fastening device 23, and four support portions 26B, fixed to the pair of extended portions 26A perpendicularly to the extended portions 26A.

The pair of extended portions 26A has a vertical expansion-contraction structure including a first member 26Aa and a second member 26Ab. The position of the second member 26Ab is changeable relative to the first member 26Aa having one end fastened to the fastening device 23. The daylighting member 21 is disposed on the second member 26Ab with the four support portions 26 interposed therebetween.

Instead, the position of the second member 26Ab relative to the first member 26Aa may be changeable stepwise or continuously.

In the present embodiment, changing the position of the second member 26Ab in which the first member 26Aa extends using the adjusting mechanism 37 enables an adjustment of the vertical position of the daylighting member 21.

When, for example, an upper area of the daylighting member 21 is shaded by a fence, this structure lowers the position of the daylighting member 21 to allow sunlight to be incident on the upper area. In this manner, the area that receives direct light can be adjusted by adjusting the position of the daylighting member 21 relative to the ceiling 1002a. This structure can thus enable a fine adjustment depending on the season or the solar altitude of day.

The daylighting member 21 installed at a predetermined position does not always have a maximum incident area, so that the amount of light captured may run short in relation to the window glass 1001 and the eaves 4. Moving the daylighting member 21 toward the window glass 1001 enables an increase of the incident area but may require an adjustment of the level of the daylighting member 21 in relation to glare. In the structure of the present embodiment, an adjustment of the level of the daylighting member 21 enables a reduction of glare incident on the human eyes in a room.

### (Modification Example of Adjusting Mechanism)

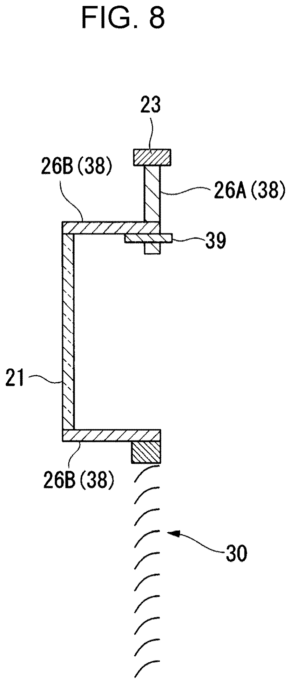

Fig. 8 is a modification example of the adjusting mechanism according to the third embodiment.

As illustrated in Fig. 8, an adjusting mechanism 38 is also usable. The adjusting mechanism 38 includes support portions 26B, which support the daylighting member 21 and are movable relative to or fixed to the pair of extended portions 26A extending from the fastening device 23. The adjusting mechanism 38 includes a stopper member (restricting device) 39 at a lower end portion of each extended portion 26A. The stopper member 39 restricts an amount of the downward movement (position) of the support portions 26B relative to the extended portion 26A.

The stopper member 39 is fixed to a predetermined position of each extended portion 26A. Here, the stopper member 39 is disposed at the level at which glare is probably observed in the room through the daylighting member 21. Specifically, the stopper member 39 is positioned at the lower limit position at which the daylighting member 21 prevents glare. The lower limit position of the daylighting member 21 at which the daylighting member 21 prevents glare is determined in accordance with conditions such as the environment in which the daylighting system 36 is installed or the structure of the building. Setting the stopper member 39 at the lower limit position can prevent people in the room from being dazzled.

The stopper member 39 does not have to be fixed at a predetermined position on the extended portion 26A. As long as the stopper member 39 is prevented from being moved downward beyond the lower limit position, the stopper member 39 may be movable relative to the extended portion 26A concurrently with the support portions 26B. For example, when each extended portion 26A has a screw portion and a nut is used as the stopper member 39, the positions of the support portions 26B on the extended portion 26A can be determined by the stopper member 39. Such a structure can also prevent glare.

### [Fourth Embodiment]

A daylighting device according to a fourth embodiment of the present invention is described now.

The basic structure of the daylighting device according to the present embodiment described below is substantially the same as that of the first embodiment, but differs in that the daylighting device also includes a daylighting auxiliary sheet. The following describes the point different from that of the first embodiment in detail and does not describe the same points. In the drawings used for the description, components that are the same as those illustrated in Figs. 1 to 3H are denoted with the same reference signs.

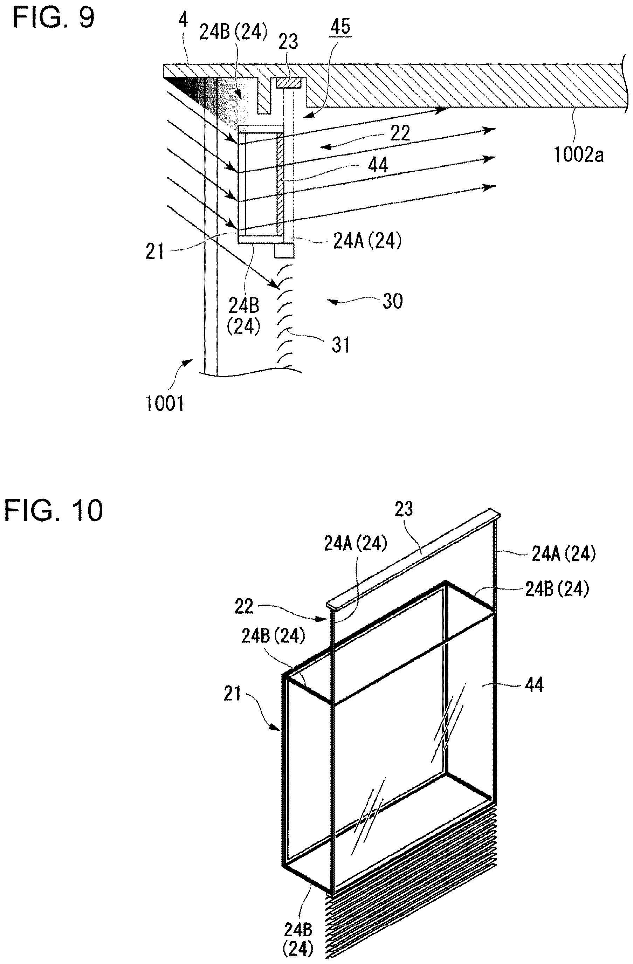

Fig. 9 is a diagram of a schematic structure of the daylighting device according to the fourth embodiment. Fig. 10 is a perspective view of a schematic structure of the daylighting device according to the fourth embodiment. As illustrated in Figs. 9 and 10, a daylighting system 45 according to the present embodiment also includes a daylighting auxiliary sheet 44 on the interior side of the daylighting member 21.

The daylighting auxiliary sheet 44 has a function of supplementing the daylighting characteristics. Examples of the daylighting auxiliary sheet 44 include a prism sheet and a light diffusion sheet. The daylighting auxiliary sheet 44 is disposed on the side of the daylighting member 21 across from the window glass 1001, the daylighting member 21 being moved to the second position, closer to the window glass 1001, by the adjusting mechanism 24. The daylighting auxiliary sheet 44 is positioned immediately below the fastening position (first position) at which the daylighting system 45 is fixed to the room. The daylighting auxiliary sheet 44 is attachable to and removable from the support unit 22, which supports the daylighting member 21.

According to the present embodiment, the daylighting auxiliary sheet 44, which supplements the daylighting characteristics of the daylighting member 21, can add another function. The daylighting auxiliary sheet 44, which is appropriately replaceable, is appropriately replaceable with an auxiliary sheet having another function depending on the structure of the building or the room conditions.

The daylighting auxiliary sheet 44 is not limited to the above-described sheet and may be, for example, a sheet or structure intended to additionally have design qualities.

### [Fifth Embodiment]

A daylighting device according to a fifth embodiment of the present invention is described now.

The basic structure of the daylighting device according to the present embodiment described below is substantially the same as that of the first embodiment, but differs in that the daylighting device also includes a light-shielding sheet. The following describes the point different from that of the first embodiment in detail and does not describe the same points. In the drawings used for the description, components that are the same as those illustrated in Figs. 1 to 3H are denoted with the same reference signs.

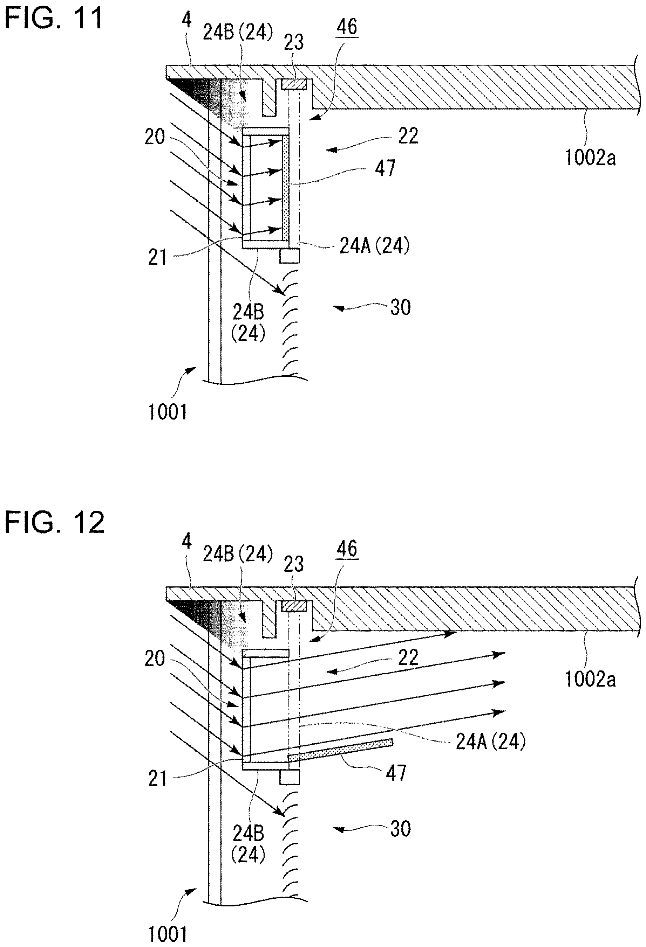

Fig. 11 is a diagram of a schematic structure of a daylighting device according to a fifth embodiment. Fig. 12 is a diagram of a light-shielding sheet (light-shielding member) according to a fifth embodiment in a state after being rotated.

As illustrated in Figs. 11 and 12, a daylighting system 46 according to the present invention also includes a light-shielding member 47 that blocks light.

The light-shielding member 47 is disposed on the side of the daylighting member 21 across from the window glass 1001, the daylighting member 21 being moved to the second position closer to the window glass 1001 by the adjusting mechanism 24. The light-shielding member 47 is positioned immediately below the fastening position (first position) at which the daylighting system 46 is fixed to a room.

The light-shielding member 47 is rotatable relative to the support unit 22 so that the upper end is rotatable to the interior side about the lower end, serving as the anchor point. Thus, the light-shielding member 47 is switchable between a light shielding state illustrated in Fig. 11 and a daylighting state illustrated in Fig. 12. The light-shielding member 47 is attachable to and removable from the support unit 22, which supports the daylighting member 21.

The structure according to the present embodiment including the light-shielding member 47 that blocks light emerging from the daylighting member 21 can shade the room. In addition, the structure according to the present embodiment can adjust the interior daylighting degree by rotating the light-shielding member 47 and then stopping the light-shielding member 47 at a predetermined position. Particularly, using this structure can preferentially block the emerging light directed below the horizontal surface. This structure can thus prevent glare without losing the daylighting effect.

The structure of the light-shielding member 47 is not limited to the above-described rotatable structure and may be a flip-up structure or a sliding structure (movable in the horizontal direction). Alternatively, the structure may be a winding structure such as a roll screen.

In any of the above-described structures, controlling or blocking of light can be adjusted.

### [Sixth Embodiment]

A daylighting device according to a sixth embodiment of the present invention is described now.

The basic structure of the daylighting device according to the present embodiment described below is substantially the same as that of the first embodiment, but differs in that the daylighting device has a function of changing the inclination of the daylighting member. The following describes the point different from that of the first embodiment in detail and does not describe the same points. In the drawings used for the description, components that are the same as those illustrated in Figs. 1 to 3H are denoted with the same reference signs.

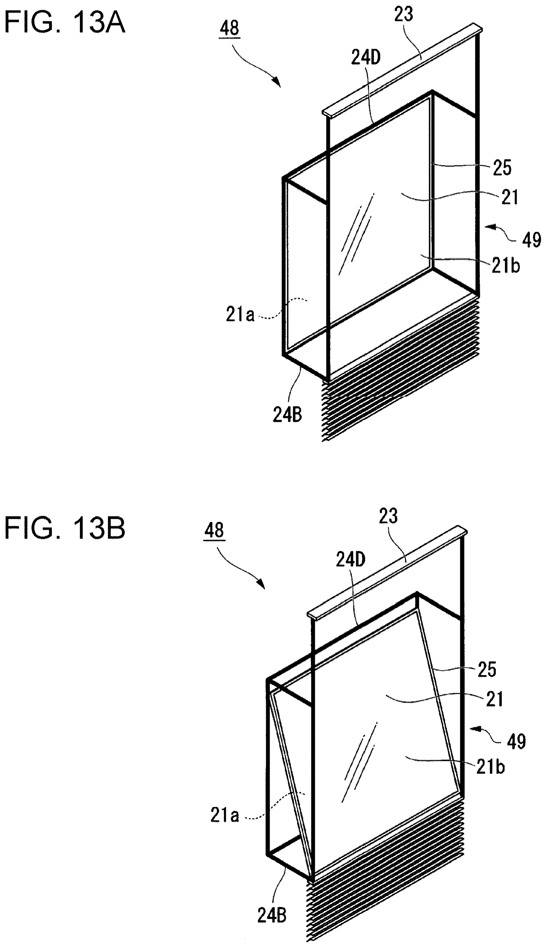

Figs. 13A to 13C are diagrams of a schematic structure of a daylighting device according to a sixth embodiment.

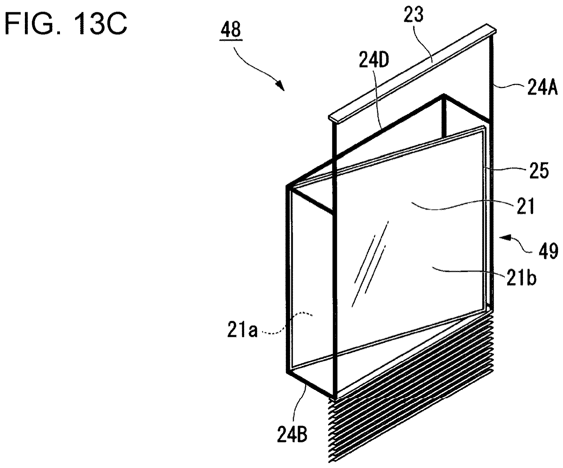

Fig. 13A illustrates the daylighting device in a normal state, Fig. 13B illustrates the daylighting device in a state of being inclined with respect to the vertical direction, and Fig. 13C illustrates the daylighting device in a state of being inclined with respect to the lateral direction.

As illustrated in Figs. 13A to 13C, a daylighting system 48 according to the present embodiment includes an adjusting mechanism 49, which can incline the light incident surface (top surface) of the daylighting member 21 with respect to the surface of the window glass 1001. In the normal state, as illustrated in Fig. 13A, the daylighting member 21 is fitted into the frame 24D and the light incident surface 21a of the daylighting member 21 is in a position parallel to the fastening device 23.

In a small room or to brighten the vicinity of the ceiling near the window, the adjusting mechanism 49 can incline the daylighting member 21 so that the light incident surface 21a faces down and the light emerging surface 21b faces up, as illustrated in Fig. 13B. Specifically, the daylighting member 21 is inclined to have the lower end of located closer to the blind 31 and the upper end located closer to the frame 24D.

As illustrated in Fig. 13C, when the window does not face due south, the daylighting member 21 can be inclined so that the light incident surface 21a faces due south. Specifically, the daylighting member 21 is inclined to have one side in the lateral direction located closer to one of the extended portions 24A and the other side in the lateral direction located closer to the frame 24D.

Specific structures illustrated in Figs. 13B and 13C are described, below.

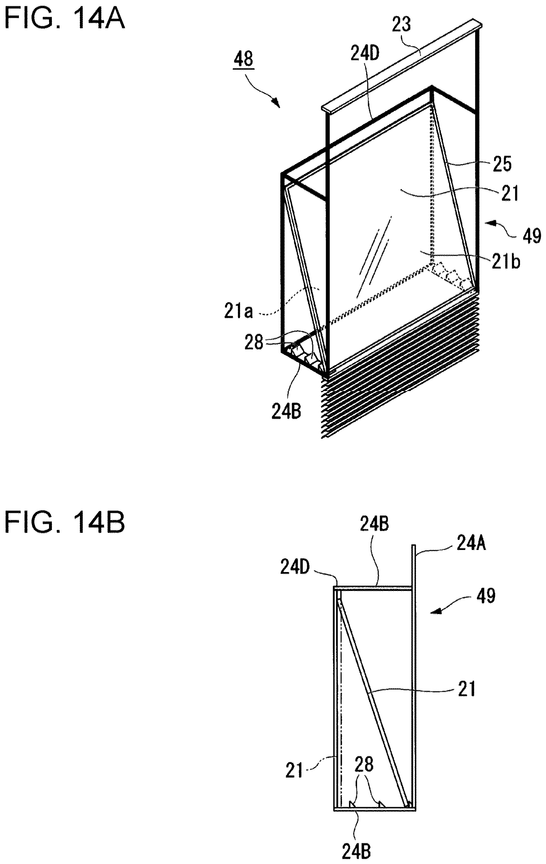

Figs. 14A and 14B specifically illustrate the structure illustrated in Fig. 13B.

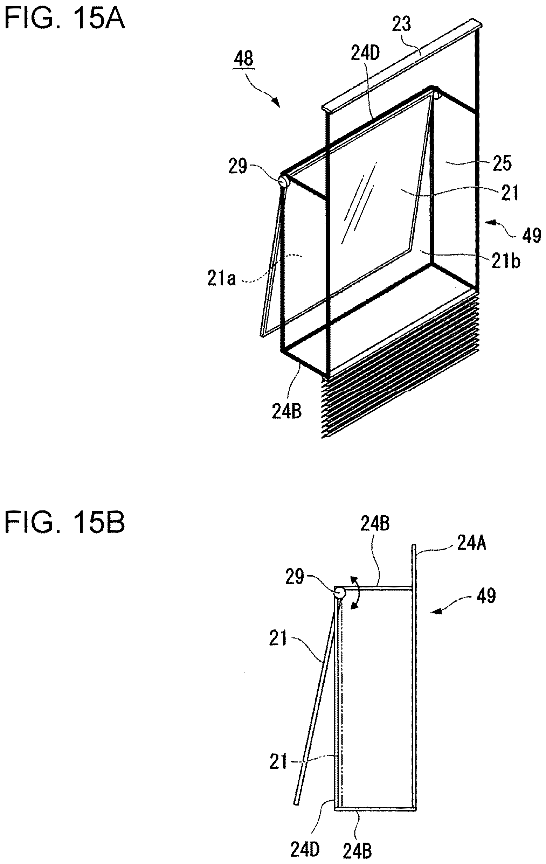

Figs. 15A and 15B specifically illustrate the structure illustrated in Fig. 13B.

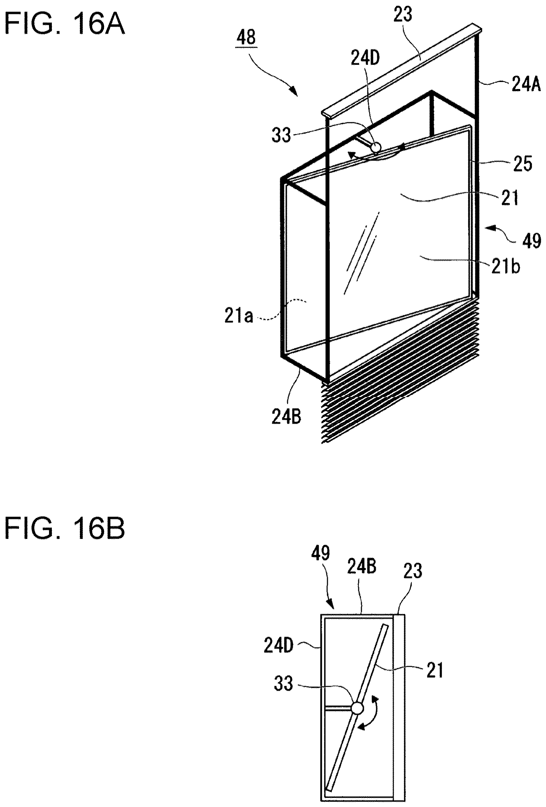

Figs. 16A and 16B specifically illustrate the structure illustrated in Fig. 13C.

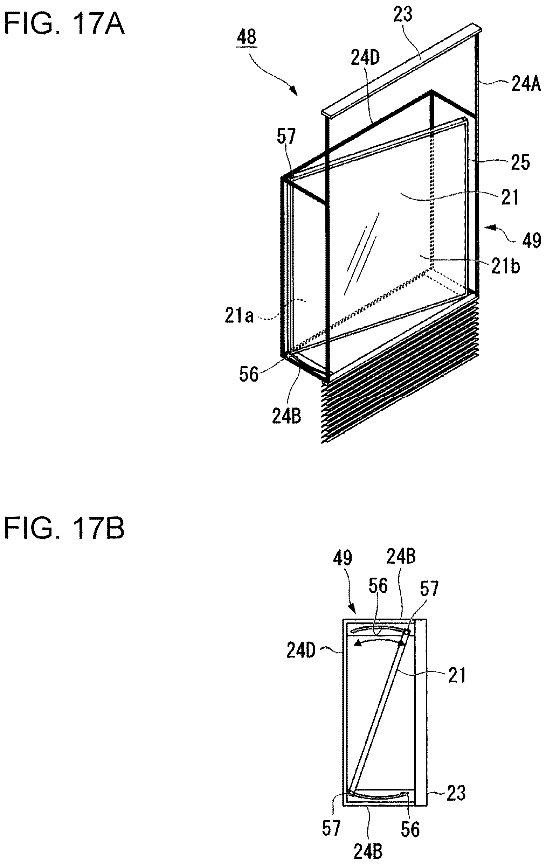

Figs. 17A and 17B specifically illustrate the structure illustrated in Fig. 13C.

Figs. 14A, 15A, 16A, and 17A are perspective views. Figs. 14B, 15B, 16B, and 17B are side views.

As illustrated in Figs. 14A and 14B, as an example of the structure illustrated in Fig. 13B in which the daylighting member 21 is inclined with respect to the vertical direction, multiple protrusions 28 may be disposed at predetermined intervals on the support portions 24B of the adjusting mechanism 49 so that the daylighting member 21 can change its inclination angle stepwise.

In another example, as illustrated in Figs. 15A and 15B, a pair of rotation jigs 29, which rotatably support both upper ends of the daylighting member 21, may be disposed at both upper ends of the frame 24D. In this case, the daylighting member 21 can change its inclination angle about the rotation axes of the rotation jigs 29, extending horizontally.

As illustrated in Figs. 16A and 16B, as an example of a structure illustrated in Fig. 13C in which the daylighting member 21 is inclined with respect to the lateral direction, the daylighting member 21 may be coupled to an upper portion of the frame 24D of the adjusting mechanism 49 with a ball joint 33, and the daylighting member 21 may be rotated about the vertically extending rotation axis of the ball joint 33 at any changeable angle.

As illustrated in Figs. 17A and 17B, as another example, the daylighting member 21 may have protrusions 57 at both lower ends, and the pair of protrusions 57 may be inserted into curved long holes 56 formed in the support portions 24B of the adjusting mechanism 49. In this structure, when the pair of protrusions 57 are moved along the long holes 56, the inclination angle of the daylighting member 21 with respect to the lateral direction can be changed.

The structure including the ball joint 33 illustrated in Figs. 16A and 16B or the protrusions 57 and the long holes 56 illustrated in Figs. 17A and 17B may be included in the above-described structure in which the daylighting member 21 is inclined with respect to the vertical direction.

The structure according to the present embodiment can adjust the daylighting member 21 so that it faces an optimum direction in accordance with the structure of the building, the orientation of the room, or the size of the room. The structure according to the present embodiment can thus acquire intended daylighting characteristics.

### [Seventh Embodiment]

A daylighting device according to a seventh embodiment of the present invention is described now.

The basic structure of the daylighting device according to the present embodiment described below is substantially the same as that of the second embodiment, but differs in that the structure has a function of adjusting the balance of the daylighting member with a forward or rearward movement. The following describes the point different from that of the second embodiment in detail and does not describe the same points. In the drawings used for the description, components that are the same as those illustrated in Figs. 4 and 5 are denoted with the same reference signs.

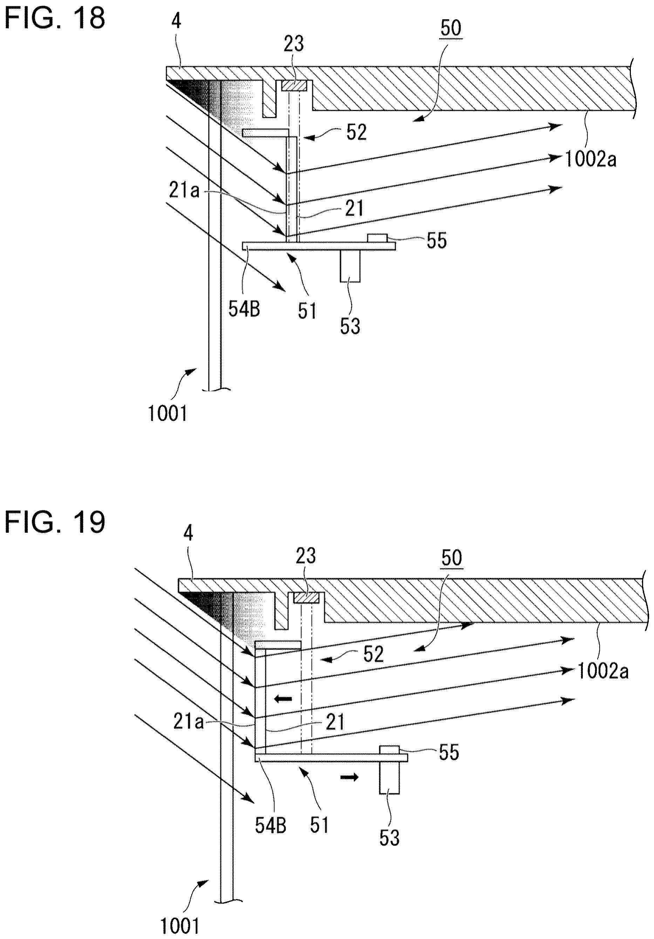

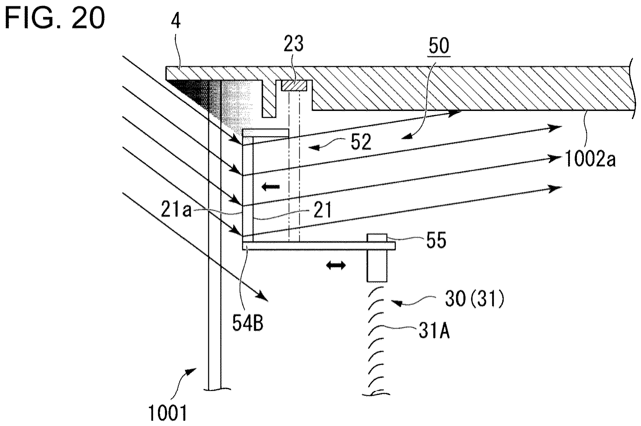

Fig. 18 is a diagram of a schematic structure of a daylighting device according to a seventh embodiment in a first position. Fig. 19 is a diagram of a schematic structure of the daylighting device according to the seventh embodiment in a second position. Fig. 20 is a diagram of a weight according to a modification example.

As illustrated in Figs. 18 and 19, a daylighting system 50 according to the present embodiment includes a support unit 52, which moves the daylighting member 21 toward and away from the window glass 1001 using an adjusting mechanism 51, and a weight 53, which adjusts the center of gravity of the support unit 52 that changes in accordance with the movement of the daylighting member 21.

The weight 53 is disposed below the daylighting member 21 supported by the support unit 52, and moves relative to the support unit 52 to change the distance from itself to the window glass 1001. Specifically, the weight 53 is movable toward and away from the window glass 1001 along a support portion 54B that supports a lower end of the daylighting member 21.

The present embodiment includes a spirit level 55 as an example of a device for checking whether a surface is parallel to the window. The spirit level 55 can detect the horizontal position of the support unit 52 and notify the detection results. The spirit level 55 may be located at any point of the support unit 52. For example, the spirit level 55 is disposed on the support portion 54B in the present embodiment. A user checks the detection results from the spirit level 55 while moving the weight 53 and places the weight 53 at a position at which the detection result shows the horizontal state.

By placing the weight 53 at an appropriate position depending on the forward or rearward movement of the daylighting member 21, the light incident surface 21a of the daylighting member 21 can be held substantially parallel to the window glass 1001.

Instead of the weight 53, as illustrated in Fig. 20, the light-shielding device 30 (for example, a blind 31 including multiple light-shielding slats 31A) may be rendered movable. The center of gravity of the support unit 52 can be also adjusted by changing the position of the light-shielding device 30 relative to the window glass 1001 in accordance with the movement of the daylighting member 21. Thus, the light incident surface 21a of the daylighting member 21 can be retained parallel to the window glass 1001. The use of the light-shielding device 30 eliminates the need for separately preparing the weight 53.

Besides the blind, other examples usable instead of the weight 53 include a light-shielding member such as a roll screen and curtain having light-shielding properties.

Preferable embodiments of the present invention have been described thus far with reference to the drawings, but the present invention is not limited to these examples. Obviously, a person having ordinary skill in the art can conceive various change or modification examples within the category of the technical idea described in the scope of claims and those change or modification examples are naturally understood as being included in the technical scope of the present invention.

For example, in the above-described embodiments, the structures in which the daylighting device is positioned immediately below the fastening position or moved forward toward the window glass are described. These structures, however, are not the only possible structures. The daylighting device may be moved further away from the window glass beyond the position immediately below the fastening position. Moving the daylighting device further to the interior enhances the effect of adjusting (reducing) the daylighting amount. This structure can prevent glare.

### [Daylighting System]

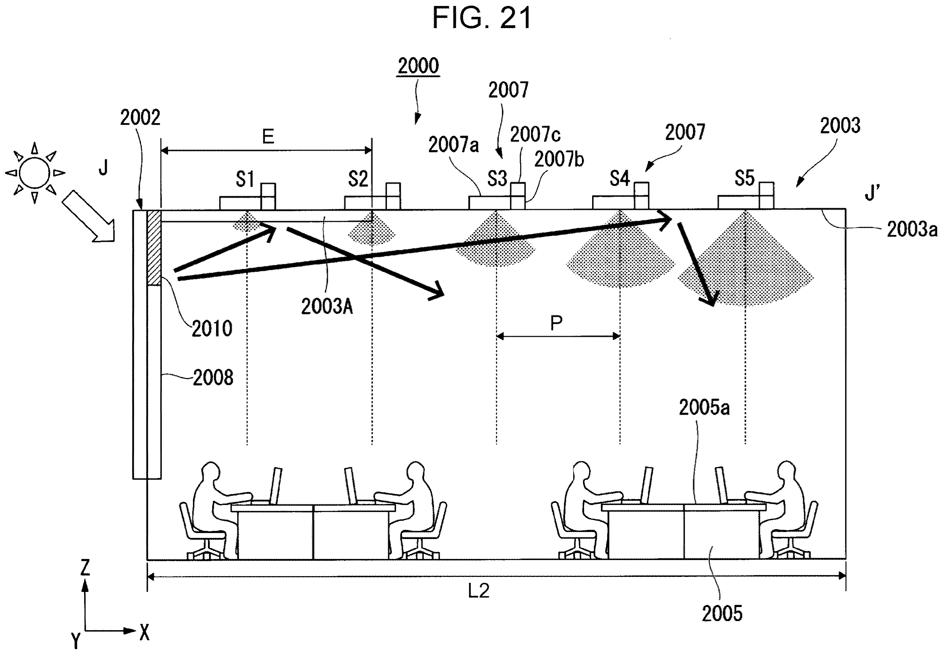

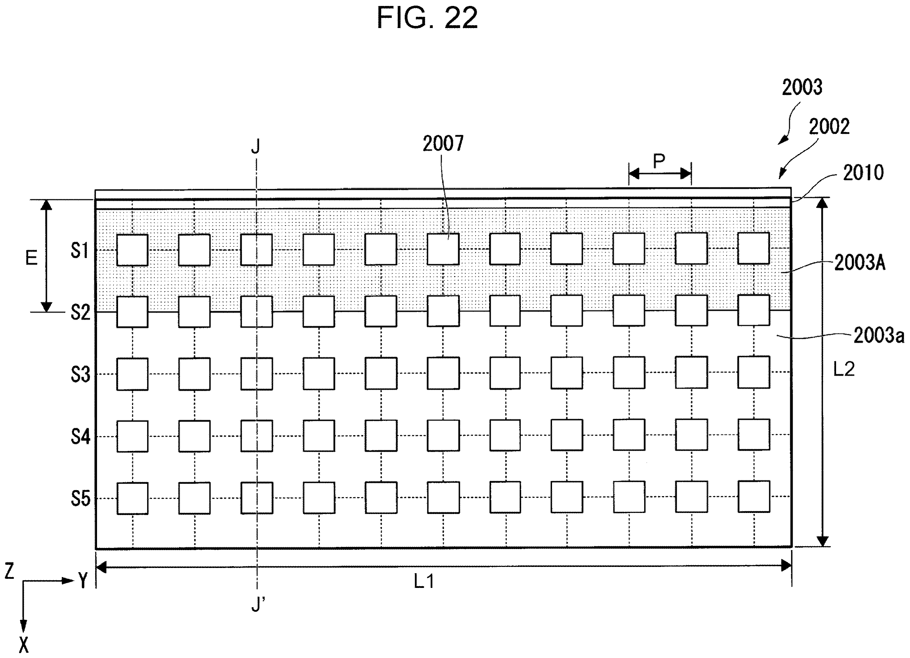

Fig. 21 is a cross-sectional view of the daylighting device and a room model 2000 including an illumination control system, taken along line J-J' in Fig. 22. Fig. 22 is a plan view of the ceiling of the room model 2000.

In the room model 2000, the ceiling member included in a ceiling 2003a of a room 2003 into which the outdoor daylight is guided may have high reflectance. As illustrated in Figs. 21 and 22, a reflective ceiling member 2003A is disposed at the ceiling 2003a of the room 2003 as an example of the ceiling member having reflectance. The reflective ceiling member 2003A is disposed at an area of the ceiling 2003a near the window for the purpose of facilitating guiding outdoor daylight from a daylighting device 2010 installed at a window 2002 into the rear of the room. Specifically, the reflective ceiling member 2003A is disposed in a predetermined area E (area extending for approximately 3 m from the window 2002) of the ceiling 2003a.

As described above, the reflective ceiling member 2003A efficiently guides the outdoor daylight guided into the room through the window 2002 at which the daylighting device 2010 (daylighting device according to any of the above-described embodiments) is installed into the rear of the room. The outdoor daylight guided to the ceiling 2003a in the room from the daylighting device 2010 is reflected by the reflective ceiling member 2003A and redirected to irradiate a desk surface 2005a of a desk 2005 placed at the rear of the room to effectively shine the desk surface 2005a.

The reflective ceiling member 2003A may have diffused reflection properties or mirror reflection properties. Preferably, the reflective ceiling member 2003A has an appropriate mixture of both properties to exert an effect of shining the desk surface 2005a of the desk 2005 placed at the rear of the room and an effect of preventing discomfort glare for people in the room.

A large amount of light guided into the room by the daylighting device 2010 is directed to the ceiling near the window 2002, but the amount of light is usually sufficient near the window 2002. Thus, the reflective ceiling member 2003A described above is used to allow the light incident on the ceiling (area E) near the window to be distributed to the rear of the room that receives a smaller amount of light than the area near the window.

The reflective ceiling member 2003A can be formed by, for example, embossing a metal plate, such as an aluminium plate, to form convexes and concaves on the order of several tens of microns or by vapor deposition of a metal thin film, such as an aluminium thin film, on the surface of a resin substrate similarly having convexes and concaves. Alternatively, convexes and concaves may be formed by embossing a surface having a larger curve.

The distribution properties of light or the distribution of light in the room can be controlled by appropriately changing the shape formed by embossing the reflective ceiling member 2003A. For example, when the reflective ceiling member 2003A has an embossed area extending in a stripe shape at the rear of the room, light reflected by the reflective ceiling member 2003A spreads in the lateral direction (in the direction crossing the longitudinal direction of convexes and concaves) of the window 2002. In the case where the window 2002 of the room 2003 has a limited size or faces in a limited direction, the reflective ceiling member 2003A with such properties can be used to horizontally disperse light and reflect the light to the rear of the room.

The daylighting device 2010 is used as part of the illumination control system of the room 2003. The illumination control system includes, for example, components of the entire room including a daylighting device 2010, multiple interior lighting devices 2007, a solar adjusting device 2008 installed at the window, a control system for these devices, and the reflective ceiling member 2003A installed at the ceiling 2003a.

The daylighting device 2010 is disposed at an upper portion of the window 2002 in the room 2003 and the solar adjusting device 2008 is disposed at a lower portion of the window 2002. Here, a blind is used as an example of the solar adjusting device 2008, but the solar adjusting device 2008 is not limited to this.

The multiple interior lighting devices 2007 are arrayed in a grid pattern in the room 2003 in the lateral direction (Y direction) of the window 2002 and in the depth direction (X direction) of the room. These multiple interior lighting devices 2007 constitute the entire illumination system of the room 2003 together with the daylighting device 2010.

Figs. 21 and 22 illustrate, for example, the ceiling 2003a of an office having a dimension L₁ of the window 2002 in the lateral direction (Y direction) of 18 m and a dimension L₂ of the room 2003 in the depth direction (X direction) of 9 m. Here, the interior lighting devices 2007 are arrayed in a grid pattern at intervals P of 1.8 m in the lateral direction (Y direction) and the depth direction (X direction) of the ceiling 2003a.

More specifically, 50 interior lighting devices 2007 are arrayed in ten columns (Y direction) by 5 lines (X direction).

Each interior lighting device 2007 includes an interior illumination device (interior illuminator) 2007a, a brightness detector 2007b, and a controller 2007c. The interior illumination device 2007a is integrated with the brightness detector 2007b and the controller 2007c.

Each interior lighting device 2007 may include multiple interior illumination devices 2007a and multiple brightness detectors 2007b. Here, the brightness detectors 2007b are disposed in one to one correspondence with the interior illumination devices 2007a. The brightness detectors 2007b receive light reflected at the surface irradiated by the interior illumination devices 2007a and detect the illuminance of the irradiated surface. Here, the brightness detectors 2007b detect the illuminance of the desk surface 2005a of the desk 2005 placed in the room.

The controllers 2007c provided in one to one correspondence with the interior lighting devices 2007 are connected to each other. The interior lighting devices 2007 are feedback-controlled by the controllers 2007c connected to each other so that the desk surface 2005a detected by the brightness detectors 2007b has a predetermined target illuminance L0 (for example, an average illuminance of 750 lx). The controllers 2007c adjust the light output of LED lamps of the respective interior illumination devices 2007a in the feedback control.

### Industrial Applicability

An aspect of the present invention is applicable to, for example, a daylighting device required to appropriately control the daylighting area.

### Reference Signs List

R fastening position
20,2010 daylighting device
21 daylighting member
22, 52 support unit
24, 34, 37, 38, 49, 51 adjusting mechanism
24A, 26A extended portion
24B, 24C, 26, 26B, 54B support portion
31 blind
31A light-shielding slat
39 stopper member
39 stopper member (restricting device)
42 daylighting portion
44 daylighting auxiliary sheet
47 light-shielding member
53 weight
55 spirit level
1001 window glass
2002 window

## Claims

1. A daylighting device, comprising:
a daylighting member; and
a support unit, disposed on an interior side of a window glass to support the daylighting member,
wherein the support unit includes an adjusting mechanism that adjusts a position of the daylighting member relative to the window glass.

2. The daylighting device according to Claim 1,
wherein the adjusting mechanism includes an extended portion that extends downward from a fastening position at which the adjusting mechanism is fastened to the interior, and a support portion that supports the daylighting member and moves relative to the extended portion.

3. The daylighting device according to Claim 1 or 2,
wherein the adjusting mechanism moves the daylighting member toward and away from the window glass.

4. The daylighting device according to Claim 3,
wherein the adjusting mechanism moves the daylighting member toward the window glass beyond a fastening position at which the adjusting mechanism is fastened to the interior or away from the window glass beyond the fastening position.

5. The daylighting device according to any one of Claims 1 to 4,
wherein the adjusting mechanism vertically moves the daylighting member.

6. The daylighting device according to Claim 5,
wherein the adjusting mechanism includes restricting means for restricting an amount of a downward movement of the daylighting member.

7. The daylighting device according to Claim 6,
wherein the restricting means is a stopper member.

8. The daylighting device according to any one of Claims 1 to 7, further comprising:
a daylighting auxiliary sheet attachable to and removable from the support unit and disposed on a side of the daylighting member moved toward the window glass by the adjusting mechanism, the side of the daylighting member being across from the window glass.

9. The daylighting device according to any one of Claims 1 to 7, further comprising:
a light-shielding member disposed on the support unit on a side of the daylighting member moved toward the window glass by the adjusting mechanism, the side of the daylighting member being across from the window glass,
wherein the light-shielding member has a structure capable of adjusting light control and light shielding.

10. The daylighting device according to Claim 9,
wherein the light-shielding member has a structure rotatable to an interior side of the support unit.

11. The daylighting device according to Claim 9,
wherein the light-shielding member has a structure capable of being wound up and down.

12. The daylighting device according to any one of Claims 1 to 11,
wherein the adjusting mechanism inclines a surface of the daylighting member with respect to a surface of the window glass.

13. The daylighting device according to any one of Claims 1 to 12, further comprising:
a weight disposed on the support unit below the daylighting member,
wherein the weight moves relative to the support unit to change a distance between the weight and the window glass.

14. The daylighting device according to Claim 13,
wherein the weight is constituted of a blind including a plurality of light-shielding slats, a roll screen having light shielding properties, or a curtain having light shielding properties.

15. The daylighting device according to Claim 13 or 14, further comprising:
a device disposed on the support unit and capable of checking whether the device is parallel to a window.

16. The daylighting device according to Claim 15,
wherein a spirit level is included as the device capable of checking whether the device is parallel to the window.
